## Europäisches Patentamt
## European Patent Office
## Office européen des brevets

(19)

(11) Veröffentlichungsnummer: **0 230 636**
**B1**

(12)

# EUROPÄISCHE PATENTSCHRIFT

(45) Veröffentlichungstag der Patentschrift:
21.03.90

(51) Int. Cl.⁴: **F03B 15/00, H02P 9/42**

(21) Anmeldenummer: 86117856.4

(22) Anmeldetag: 22.12.86

(54) Wassergetriebener Maschinensatz mit wirkungsgradoptimaler Vorgabe des Drehzahlsollwertes.

(30) Priorität: 17.01.86 DE 3601288

(43) Veröffentlichungstag der Anmeldung:
05.08.87 Patentblatt 87/32

(45) Bekanntmachung des Hinweises auf die Patenterteilung:
21.03.90 Patentblatt 90/12

(84) Benannte Vertragsstaaten:
AT CH DE LI

(56) Entgegenhaltungen:
DE-A- 3 005 375
US-A- 4 400 659

(73) Patentinhaber: Siemens Aktiengesellschaft,
Wittelsbacherplatz 2, D-8000 München 2(DE)

(72) Erfinder: Hochstetter, Werner, Dipl.-Ing.,
Dompfaffstrasse 136, D-8520 Erlangen(DE)

ACTORUM AG

## Beschreibung

Die Erfindung bezieht sich auf einen Maschinensatz aus einer über eine elektrische Drehzahlregulierung regelbaren Wasserturbine und einem fest an die Wasserturbine angekuppelten Generator, der über einen frequenzregelbaren Umrichter ein elektrisches Netz konstanter Frequenz speist.

Eine konkrete Anordnung dieser Art ist bereits aus der DE-A 3 005 375 bekannt. Eine von Wasser durchflossene Propellerturbine mit nicht verstellbaren Laufradschaufeln ist dabei mit einem Generator gekuppelt. Die Drehzahl dieses Turbinensatzes wird stufenlos über einen frequenzregelbaren Stromrichter in einem bestimmten Drehzahlbereich eingestellt. Eine solche Anordnung ermöglicht es, den Generator für eine Nennfrequenz auszulegen, die kleiner ist als die Netzfrequenz. So wird der Turbinensatz in dem betrachteten Patent mit einer Frequenz von weniger als 20 Hz an den Generatorklemmen betrieben. Hierdurch treten merklich geringere Wechselstromverluste auf, was beim Generatorbau konstruktiv insbesondere durch eine Erhöhung der Ausnutzungsziffer berücksichtigt werden kann. Da die Leistungsabgabe nun durch Vorgabe der Turbinendrehzahl auf der elektrischen Seite geregelt wird, kann die früher hierfür verwendete Regelung über die mechanische Verstellung der Laufradschaufeln entfallen. Aus der Patentschrift sind allerdings keinerlei Angaben darüber zu entnehmen, wie eine hierfür notwendige Einrichtung zur Vorgabe des dazugehörigen Drehzahlsollwertes praktisch aufgebaut ist.

Der vorliegenden Erfindung dagegen liegt die Aufgabe zugrunde, eine solche Vorrichtung konkret anzugeben, die auch universell für alle möglichen Turbinentypen verwendbar ist. Der Drehzahlsollwert des Maschinensatzes soll durch einen Führungsgrößenformer so vorgebbar sein, daß unter Berücksichtigung der aktuellen turbinenarbeitspunktspezifischen und hydraulischen Verhältnisse der jeweils maximal mögliche Wirkungsgrad erreicht wird. Ferner soll es möglich sein, durch eine zusätzliche Pegelregelung den Pegel im Ober- oder Unterwasser ebenfalls unter der Randbedingung maximal möglichen Wirkungsgrades in gewünschter Weise einstellen zu können.

Die Aufgabe wird gelöst durch die in Anspruch 1 enthaltenen Merkmale.

Besonders vorteilhaft ist es, wenn ein einen Wirkleistungsistwert auswertender Maximum-Power-Point-Regler (MPP-Regler) den Drehzahlsollwert durch sukzessives Aufschalten inkrementaler Korrekturwerte verändert, bis optimale Wirkleistung ans Netz abgegeben wird.

Bei einem Maschinensatz mit einer einfach- bzw. doppeltregulierbaren Turbine gibt eine Regeleinrichtung zur Einstellung eines gewünschten Ober- oder Unterwasserpegels bevorzugt eine der Kenngrößen als Stellsignal vor.

Dabei ist es bei einer doppeltregulierbaren Turbine von besonderem Vorteil, wenn ein Kennliniengeber die nicht vom Pegelregler vorgegebene Kenngröße abhängig von der aktuellen Drehzahl des Maschinensatzes wirkungsgradoptimal der anderen Kenngröße nachführt.

Unzulässige Betriebsverhältnisse werden insbesondere dadurch vermieden, daß ein Begrenzer die als Stellsignal zur Regulierung des Wasserpegels dienende Kenngröße in Abhängigkeit der aktuellen Drehzahl des Maschinensatzes und der Fallhöhe begrenzt.

Nachfolgend wird die Erfindung anhand der unten aufgeführten Abbildungen näher erläutert. Dabei zeigt

Figur 1 ein allgemeines Blockschaltbild des Maschinensatzes,

Figur 2 ein Schaltbild der erfindungsgemäßen Vorrichtung,

Figur 3 eine im Vergleich zu Figur 2 weitere Ausgestaltung der Erfindung mit einem zusätzlichen MPP-Regler,

Figur 4 eine im Vergleich zur Figur 3 weitere Ausgestaltung der Erfindung mit einem zusätzlichen Pegelregler, wobei beispielhaft der Oberwasserpegel über die als Stellsignal dienende Kenngröße der Laufradöffnung eingestellt wird,

Figur 5 eine im Vergleich zur Figur 4 weitere Ausgestaltung der Erfindung mit zusätzlicher Begrenzung der zur Pegelregelung verwendeten Kenngröße, wobei beispielhaft der Unterwasserpegel über die Leitrad- bzw. Düsenöffnung eingestellt wird,

Figur 6 eine im Vergleich zur Figur 5 weitere Ausgestaltung der Erfindung mit zusätzlicher Nachführung der nicht zur Wasserpegelregelung verwendeten Kenngröße, wobei beispielhaft der Oberwasserpegel über die Leitrad- bzw. Düsenöffnung eingestellt wird, und

Figur 7 ein weiteres Ausführungsbeispiel, wobei zur Regelung des Unterwasserpegels die Laufradöffnung verstellt und die Leitrad- bzw. Düsenöffnung nachgeführt wird.

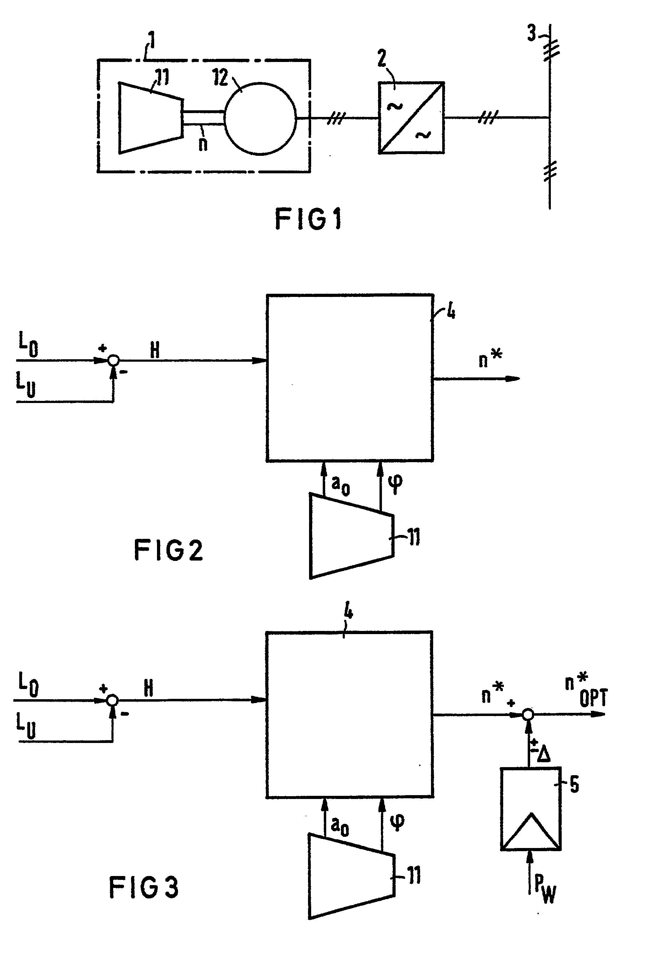

Der betrachtete Maschinensatz 1 besteht gemäß der Figur 1 aus einer Wasserturbine 11 mit einem daran fest angekuppelten Generator 12. Beide haben dieselbe Drehzahl n. An die Auswahl der Turbinenbauart und des Generatortyps werden keine besonderen Anforderungen gestellt. So können abhängig von den hydraulischen Verhältnissen bevorzugt Pelton-, Propeller-, Francis- oder Kaplan-Turbinen eingesetzt werden. Bei Propeller- und Francis-Turbinen können die Schaufeln des Leitapparates zwischen Wassereinlauf und Laufrad, auch Leitrad genannt, verstellbar ausgeführt sein. Der Öffnung dieser Leitradschaufeln entspricht bei einer Pelton-Turbine die verstellbare Düsenöffnung. Bei Kaplan-Turbinen können stattdessen auch die Schaufeln des Laufrades verstellbar ausgeführt sein. Man spricht in diesen Fällen von Turbinen mit "Einfachregulierung". Sind insbesondere bei Kaplan-Turbinen beide Schaufelgruppen verstellbar ausgeführt, so spricht man von "Doppelregulierung". Die jeweilige Leitrad- bzw. Düsenöffnung $a_0$ und die Öffnung $\phi$ der Laufradschaufeln sind bestimmend für das Betriebsverhalten der Turbine, und somit wesentliche Kenngrößen für deren Kennlinien. Sind je nach Bauart der Turbine eine oder beide Kenngrößen veränderbar, so können sie als Stellsignale für die Einstellung bestimmter Betriebspunkte herangezogen werden.

Als Generator 12 wird bevorzugt eine Synchronmaschine eingesetzt. Es ist aber auch denkbar, hierfür eine Asynchronmaschine vorzusehen. Dieser Generator speist über einen in seiner Frequenz regelbaren Umrichter 2 ein Netz 3 konstanter Frequenz. Als Umrichtertyp kommt hierbei bevorzugt ein Zwischenkreisumrichter oder auch ein Direktumrichter in Frage. Eine der jeweils vorliegenden Kombination Umrichter-Generatortyp angepaßte Drehzahlregelung greift so in die Umrichtersteuerung und eine eventuell vorhandene Generatorerregung ein, daß innerhalb der technologisch zulässigen Grenzen im Prinzip jede gewünschte Drehzahl für den Maschinensatz einstellbar ist.

Der Sollwert $n^*$ für diese Drehzahlregelung wird nun gemäß der Erfindung so vorgegeben, daß der Maschinensatz immer im Wirkungsgradoptimum betrieben wird. Hierzu sind gemäß Figur 2 Mittel 4 vorhanden, die Turbinenkennlinien nachbilden. Bevorzugt bieten sich hierfür analoge Rechenschaltungen an. Es können aber auch in geeignet aufgebauten und organisierten Speichereinheiten Wertegruppen auf digitale Weise hinterlegt werden, die die Kennlinien punktförmig abbilden. Anhand dieser, zur verwendeten Turbine gehörigen sogenannten "Muscheldiagramme" wird der Zusammenhang zwischen optimalem Betriebspunkt und dem dazugehörigen Drehzahlsollwert $n^*$ des Maschinensatzes hergestellt. Zur Auffindung dieses Betriebspunktes werden sowohl betriebsspezifische als auch hydraulische Größen herangezogen. Diese sind die aktuellen Werte $a_O$ und $\phi$ der beiden Kenngrößen und die Fallhöhe H. Letztere ergibt sich aus der Differenz der aktuellen Pegel des Ober- und Unterwassers ($L_O - L_U$). Es ist in diesem Fall ohne Bedeutung, ob die Turbine "regulierbar" ist, d.h. ob keine der beiden, eine oder beide Kenngrößen als Stellsignale verwendet werden können, da im Rahmen der Werte der vorliegenden Öffnungen immer der jeweils günstigste Betriebspunkt in Form des dazugehörigen optimalen Drehzahlsollwertes gefunden wird.

In weiterer Ausgestaltung der Erfindung ist es vorteilhaft, gemäß Figur 3 einen zusätzlichen Maximum-Power-Point-Regler (MPP-Regler) 5 für eine Feinoptimierung einzusetzen. Er beaufschlagt den von den kennliniennachbildenden Mitteln 4 gefundenen Sollwert $n^*$ in zeitlich aufeinanderfolgenden Abständen mit Korrekturwerten kleinen Betrags und geeigneten Vorzeichens, sogenannten "inkrementalen Korrekturwerten" $\Delta$. Der auf diese Weise gebildete Wert $n_{OPT}^*$ dient nun als eigentlicher Sollwert für die Drehzahlregelung. Die Auswertung der an den Generatorklemmen abgegebenen elektrischen Wirkleistung macht deutlich, ob der inkrementale Stelleingriff auf den Sollwert $n^*$ tatsächlich eine Erhöhung der abgegebenen Wirkleistung hervorgerufen hat oder nicht. Dementsprechend wird im nachfolgenden Zeitintervall der Korrekturwert $\Delta$ um einen weiteren Schritt erhöht oder wieder zurückgenommen. Es ist unter Umständen von Vorteil, bei der Auswertung des Wirkleistungsistwertes eine zeitliche Mittelung vorzusehen, um die Auswirkung der von anderen Ursachen hervorgerufenen Schwankungen des Wirkleistungsistwertes auf den MPP-Regler zu dämpfen.

Der zusätzliche Einsatz des MPP-Reglers hat den Vorteil, daß eventuelle in den Turbinenkennlinien enthaltene Ungenauigkeiten ausgeglichen werden. Ferner werden automatisch beinahe unmerkliche Verschiebungen des optimalen Betriebspunktes gegenüber den in den Mitteln 4 hinterlegten Kennlinien berücksichtigt. Solche Verschiebungen können ihren Grund in einem zunehmenden Verschleiß der Anlage haben. Als Folge davon muß der MPP-Regler einen im zeitlichen Mittel nicht verschwindenden Betrag des Korrekturwertes auf den ursprünglich optimalen Drehzahlsollwert aufschalten, um weiterhin einen annähernd optimalen Betrieb des Maschinensatzes zu gewährleisten. Dieser Betrag kann für eine Bewertung der bereits eingetretenen Alterung herangezogen werden.

Ferner ist es besonders vorteilhaft, daß durch den MPP-Regler auch der Generator und der Umrichter in die Optimierung mit einbezogen werden, da der Leistungsistwert auf der Netzseite erfaßt wird. So wirkt der MPP-Regler ausgleichend, wenn der kennlinienbestimmte optimale Betriebspunkt nicht genau mit dem Punkt der maximalen Wirkleistungsabgabe an das Netz übereinstimmt. Ferner korrigiert der MPP-Regler Veränderungen im Durchflußverhalten, die sonst nur durch den Einbau von zusätzlichen Meßeinrichtungen, wie z.B. Durchflußmeßgeräten berücksichtigt werden könnten.

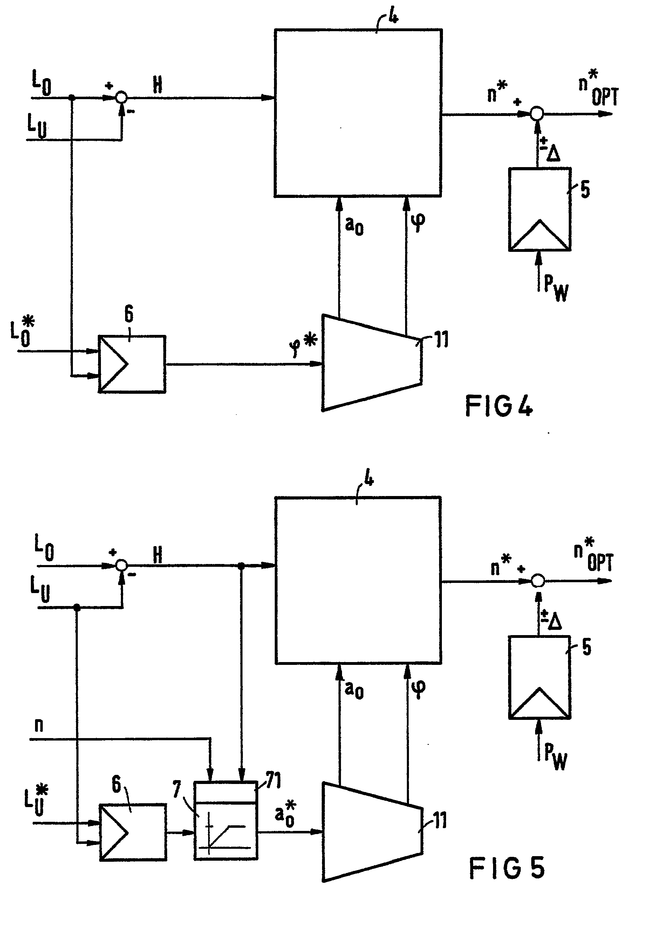

In weiterer Ausgestaltung der Erfindung ist es vorteilhaft, bei Vorhandensein einer einfach- bzw. doppeltregulierbaren Turbine einen zusätzlichen Pegelregler 6 vorzusehen, der in den Figuren 4 bis 7 dargestellt ist. Mit dessen Hilfe kann der Oberwasserpegel $L_O$ vor bzw. der Unterwasserpegel $L_U$ nach der Turbine entsprechend einem gewünschten Sollwert $L_O^*$, $L_U^*$ eingestellt werden. Eine der beiden Kenngrößen $a_O$ bzw. $\phi$ dient hierfür als Stellsignal. Figur 4 zeigt beispielhaft eine Oberwasserpegelregelung mittels Veränderung der Laufradschaufelöffnung über die Kenngröße $\phi$.

Es ist von besonderem Vorteil, daß sich die Pegelregelung in einfacher Weise mit der erfindungsgemäßen wirkungsgradoptimalen Drehzahlsollwertvorgabe kombinieren läßt. Bei Laufwasserkraftwerken kann aufgrund der jahreszeitlichen Schwankungen der zur Verfügung stehenden Wassermenge und der Einhaltung bestimmter Wasserstände, z.B. im Hinblick auf Schiffahrt und Freizeitbetrieb, nicht beliebig viel Oberwasser entnommen oder Unterwasser zugeführt werden. Dennoch stellt die erfindungsgemäße kennliniengesteuerte Drehzahlsollwertvorgabe, insbesondere zusammen mit einem MPP-Regler, auch bei einer Beschränkung aufgrund einer zusätzlichen Pegelregelung das in dem dadurch vorgegebenen Rahmen erreichbare Wirkungsgradmaximum zur Verfügung. Folglich wird zu jeder Zeit die optimal mögliche Wirkleistung vom Maschinensatz abgegeben.

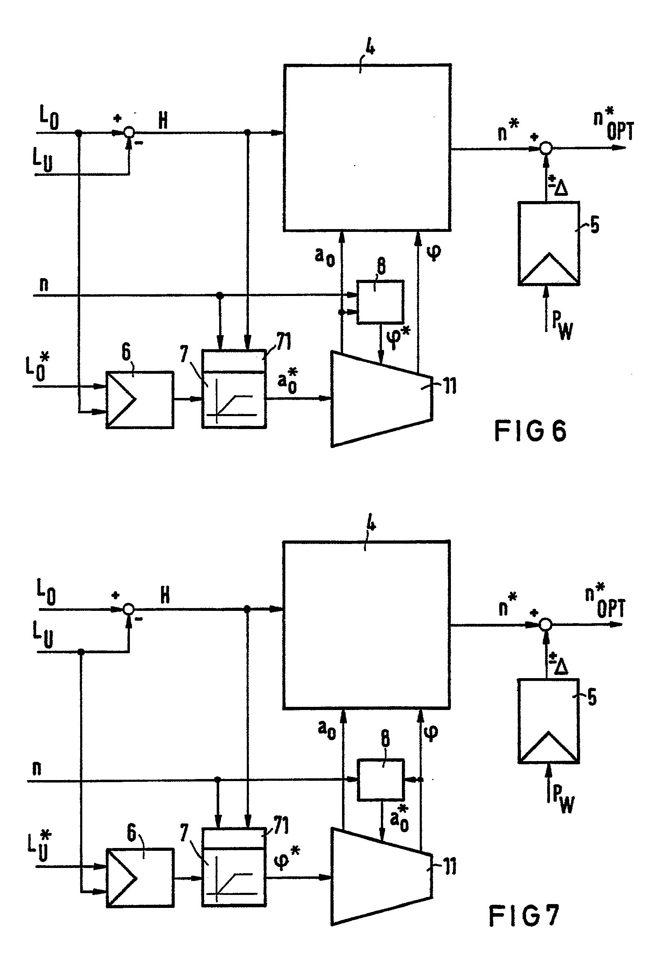

In weiterer Ausgestaltung der Erfindung wird bei Vorhandensein einer doppeltregulierbaren Turbine der Wert der nicht zur Pegelregelung benötigten Kenngröße dem aktuellen Wert der als Stellsignal zur Pegelregelung eingesetzten Kenngröße mittels eines speziellen Kennliniengebers in Abhängigkeit der aktuellen Drehzahl n des Maschinensatzes nachgeführt. Dadurch wird stets der wirkungsgradoptimale Zusammenhang zwischen den Öffnungen der beiden Stellorgane der Turbine eingestellt und der Betrag der im zeitlichen Mittel abgebbaren Leistung des Maschinensatzes weiter erhöht. Dementsprechend wird im Ausführungsbeispiel der Figur 6 die Öffnung der Laufradschaufeln der zur Oberwasserpegelregelung $L_{Og}$ dienenden Leitrad- bzw. Düsenöffnung $a_o$ mittels des Kennliniengebers 8 nachgeführt.

Schließlich wird in einer weiteren Ausgestaltung der Erfindung das Auftreten unzulässiger Betriebsverhältnisse, z.B. aufgrund Kavitation durch einen Begrenzer 7 vermieden. Dieser ist im Ausführungsbeispiel der Figur 5 dargestellt, wobei die Turbine 11 einfach- oder doppeltregulierbar ausgeführt sein kann. Eine vorgeschaltete Verarbeitungseinheit 71 legt dabei in Abhängigkeit der aktuellen Maschinendrehzahl n und der Fallhöhe H die jeweils zulässige maximale Öffnung des zur Pegelregelung dienenden Stellorganes fest. Wie im Ausführungsbeispiel gemäß der Figur 5 dargestellt, wird dort zur Regelung des Unterwasserpegels $L_U$ die Kenngröße $a_o$ als Stellsignal für die Leitrad- bzw. Düsenöffnung verwendet. Der vom Pegelregler 6 ausgegebene Sollwert $a_o^*$ wird dabei in der eben beschriebenen Weise durch den Begrenzer 7 in Verbindung mit der Verarbeitungseinheit 71 begrenzt.

Im abschließenden Ausführungsbeispiel gemäß der Figur 7 sei die Turbine doppeltregulierbar ausgeführt. Dabei wird neben der über die Mittel 4 kennliniengesteuerten Vorgabe des Drehzahlsollwertes $n^*$ und dessen Feinoptimierung mittels des MPP-Reglers 5 zum Sollwert $n_{OPT}^*$ auch der Unterwasserpegel $L_U$ mit dem Regler 6 auf den gewünschten Sollwert $L_U^*$ geführt. Dies geschieht durch Vorgabe der über den Begrenzer 7 und die dazugehörige Verarbeitungseinheit 71 begrenzten Kenngröße $\phi^*$ als Stellsignal für die Laufradöffnung. Über einen zusätzlichen Kennliniengeber 8 wird unter Berücksichtigung der aktuellen Drehzahl n des Maschinensatzes die zweite Kenngröße $a_o$ als Stellsignal $a_o^*$ für die Leitrad-bzw. Düsenöffnung wirkungsgradoptimal nachgeführt.

Der Maschinensatz 1 wird demzufolge erfindungsgemäß zu jedem Zeitpunkt in dem momentan möglichen Wirkungsgradmaximum betrieben, und gibt somit maximal mögliche Wirkleistung an das Netz ab.

## Patentansprüche

1. Maschinensatz (1) aus einer über eine elektrische Drehzahlregulierung regelbaren Wasserturbine (11) und einem fest an die Wasserturbine angekuppelten Generator (12), der über einen frequenzregelbaren Umrichter (2) ein elektrisches Netz konstanter Frequenz (3) speist, mit Mitteln (4), welche in Abhängigkeit der aktuellen Fallhöhe (H) und zweier Turbinenkenngrößen, der Öffnungen der Leit- und Laufradschaufelgruppe ($a_o$, $\varphi$) bzw. bei Peltonturbinen der Öffnungen der Düsen und der Laufradschaufelgruppe, und mittels einem das Betriebsverhalten der Turbine charakterisierenden Kennlinienfeld einen Drehzahlsollwert ($n^*$) für den Maschinensatz vorgeben, bei dem bei maximalem Wirkungsgrad optimale Wirkleistung ($P_W$) an das elektrische Netz abgegeben wird.

2. Maschinensatz nach Anspruch 1, **gekennzeichnet durch** einen einen Wirkleistungsistwert ($P_W$) auswertenden Maximum-Power-Point-Regler (MPP-Regler) (5), der den Drehzahlsollwert ($n^*$) durch sukzessives Aufschalten inkrementaler Korrekturwerte ($\Delta$ ) verändert ($n_{OPT}^*$), bis optimale Wirkleistung ans Netz abgegeben wird.

3. Maschinensatz nach Anspruch 1 oder 2 mit einer einfach- bzw. doppeltregulierbaren Turbine (11), **gekennzeichnet durch** eine Regeleinrichtung (6), die zur Einstellung eines gewünschten Ober- oder Unterwasserpegels ($L_O$, $L_U$ ) eine der Kenngrößen ($a_o$ bzw. $\phi$) als Stellsignal vorgibt.

4. Maschinensatz nach Anspruch 1 oder 2 mit einer doppeltregulierbaren Turbine, **gekennzeichnet durch**

   a) eine Regeleinrichtung (6), die zur Einstellung eines gewünschten Ober- oder Unterwasserpegels ($L_O$, $L_U$) eine der Kenngrößen ($a_o$ bzw. $\phi$) als Stellsignal vorgibt, und

   b) einen Kennliniengeber (8), der die nicht vom Pegelregler (6) vorgegebene Kenngröße ($a_o$ bzw. $\phi$) abhängig von der aktuellen Drehzahl des Maschinensatzes (n) wirkungsgradoptimal der anderen Kenngröße ( $\phi$ bzw. $a_o$) nachführt.

5. Maschinensatz nach Anspruch 3 oder 4, **gekennzeichnet durch** einen Begrenzer (7), der die als Stellsignal zur Regulierung des Wasserpegels dienende Kenngröße in Abhängigkeit der aktuellen Drehzahl (n) des Maschinensatzes (1) und der Fallhöhe (H) so begrenzt, daß keine unzulässigen Betriebsverhältnisse auftreten.

## Claims

1. Machine set (1) consisting of a water turbine (11), which can be regulated by means of an electrical speed regulation, and a generator (12) firmly coupled onto the water turbine, which feeds an electrical network of constant frequency (3) by means of a frequency-controllable converter (2), with means (4), which dependent on the actual height of fall (H) and second turbine characteristic quantities, on the openings of the guide wheel blade and rotor blade group ($a_o$, $\varphi$ ) or with Pelton turbines on the openings of the nozzles and of the rotor blade group, and by means of a characteristic field, characterizing the operational performance of the turbine, specify a speed desired value ($n^*$) for the machine set, where with maximum efficiency optimum active power ($P_W$) is delivered to the electrical network.

2. Machine set according to claim 1, characterized by a maximum-power-point-regulator (MPP-regulator) (5), evaluating an active power actual value (PW), which changes the speed desired value (n*) by means of successive starting of incremental correction values ($\Delta$) (n*OPT), until optimum active power is delivered to the network.

3. Machine set according to claim 1 or 2 with a single-controllable or double-controllable turbine (11), characterized by a regulation device (6), which specifies one of the characteristic quantities ($a_O$ or $\varphi$) as actuating signal for the adjustment of a desired upper or lower water level ($L_O$, $L_U$).

4. Machine set according to claim 1 or 2 with a double-controllable turbine, characterized by
   a) a regulation device (6), which specifies one of the characteristic quantities ($a_O$ or $\varphi$) as actuating signal for the adjustment of a desired upper or lower water level ($L_O$, $L_U$) and
   b) a characteristic transmitter (8), which adjusts the characteristic quantity ($a_O$ or $\varphi$) not specified by the level regulator (6), dependent on the actual speed of the machine set (n) in an efficiency optimum manner to the other characteristic quantity ($\varphi$ or $a_O$).

5. Machine set according to claim 3 or 4, characterized by a limiter (7), which limits the characteristic quantity, serving as actuating signal for the regulation of the water level, dependent on the actual speed (n) of the machine set (1) and the height of fall (H) in such a way that no unacceptable operating conditions arise.

**Revendications**

1. Ensemble de machine (1) constitué par une turbine hydraulique (11), réglable au moyen d'une régulation électrique de la vitesse de rotation, et une génératrice (12), qui est accouplée rigidement à la turbine hydraulique et alimente un réseau électrique à fréquence constante (3), par l'intermédiaire d'un convertisseur statique (2) dont la fréquence est réglable, et comportant des moyens (4), qui prédéterminent, en fonction de la hauteur réelle de chute (H) et de deux paramètres de la turbine, des ouvertures du groupe d'aubes directrices et d'aubes mobiles ($a_O$, $\varphi$) ou, dans le cas de turbine Pelton, des ouvertures des buses et du groupe d'aubes mobiles, et, au moyen d'un ensemble de courbes caractéristiques caractérisant le comportement de fonctionnement de la turbine, une valeur de consigne (n*) de la vitesse de rotation pour l'ensemble de machine, pour laquelle, dans le cas d'un rendement maximum, une puissance active, optimale (PW) est fournie au réseau électrique.

2. Ensemble de machine selon la revendication 1, caractérisé par un régulateur du point de puissance maximum (régulateur MPP) (5), qui évalue une valeur réelle (PW) de la puissance active et modifie (n*OPT) la valeur de consigne (n*) de la vitesse de rotation au moyen de l'application successive de valeurs incrémentales de correction ($\Delta$), jusqu'à ce

que la puissance active optimale soit délivrée au réseau.

3. Ensemble de machine suivant la revendication 1 ou 2, comportant une turbine (11), réglable de façon simple ou double, caractérisée par un dispositif de régulation (6), qui prédétermine l'un des paramètres ($a_O$ ou $\varphi$) en tant que signal de réglage, pour le réglage d'un niveau supérieur ou inférieur désiré de l'eau ($L_O$, $L_U$).

4. Ensemble de machine suivant la revendication 1 ou 2, comportant une turbine pouvant être réglée d'une manière double, caractérisée par
   a) un dispositif de régulation (6), qui prédétermine l'un des paramètres ($a_O$ ou $\varphi$) en tant que signal de réglage pour le réglage d'un niveau supérieur ou inférieur désiré de l'eau ($L_O$, $L_U$), et
   b) un générateur de courbes caractéristiques (8), qui asservit le paramètre ($a_O$ ou $\varphi$), non prédéterminé par le régulateur de niveau (6), en fonction de la vitesse de rotation réelle (n) de l'ensemble de machine, d'une manière optimale du point de vue du rendement, à l'autre paramètre ($\varphi$ ou $a_O$).

5. Ensemble de machine suivant la revendication 3 ou 4, caractérisé par un limiteur (7), qui limite le paramètre utilisé comme signal de réglage pour régler le niveau de l'eau, en fonction de la vitesse de rotation réelle (n) de l'ensemble de machine (1) et de la hauteur de chute (H) en sorte qu'il n'apparaisse aucune condition inadmissible de fonctionnement.

EP 0 230 636 B1

FIG 1

FIG 2

FIG 3

FIG 4

FIG 5

FIG 6

FIG 7